# FASCICULE DE BREVET EUROPEEN

(11) **EP 3 740 391 B1**
(45) Date de publication et mention de la délivrance du brevet: **24.01.2024**
(21) Numéro de dépôt: 18840028.7
(22) Date de dépôt: 11.12.2018
(51) Int. Cl.: B60K 6/48, B60W 10/06, B60W 10/08, B60W 20/10, B60W 30/18, F02N 11/00

(54) **GESTION PRESTATION ELECTRIQUE APRES DEMARRAGE SUR VEHICULE HYBRIDE**
VERWALTUNG DER ELEKTRISCHEN LEISTUNG NACH DEM ANFAHREN FÜR EIN HYBRIDFAHRZEUG
MANAGEMENT OF ELECTRICAL OUTPUT AFTER START-UP FOR HYBRID VEHICLE

(30) Priorité: 18.01.2018 FR 1850396
(43) Date de publication de la demande: 25.11.2020
(73) Titulaire: Stellantis Auto SAS, 78300 Poissy (FR)
(72) Inventeur: MILHAU, Yohan, 78630 Orgeval (FR); DUBILLARD, Frederic, 78600 Maisons Laffitte (FR); LEBORGNE, Ludmila, 92350 Le Plessis Robinson (FR); PLANTIER, Matthieu, 78420 carrieres sur seine (FR)
(86) Numéro de dépôt international: PCT/FR2018/053191
(87) Numéro de publication internationale: WO 2019/141912

(56) Documents cités:
- EP-A1- 2 634 060
- US-A1- 2014 288 744
- US-A1- 2016 304 086

## Description

L'invention a trait au domaine des véhicules automobiles, plus particulièrement au domaine des véhicules hybrides, c'est-à-dire avec une chaîne de traction comprenant une machine électrique et un moteur à combustion.

Le document de brevet publié US 2005/274553 A1 divulgue un système de gestion prédictive d'énergie sur un véhicule hybride. Ce système utilise différents paramètres de l'historique de conduite du véhicule pour prédire un profil de cycles de conduite futurs. Sur base de ce profil, le système gère alors de manière optimisée l'activation du moteur électrique et du moteur thermique. Ce système est intéressant en ce qu'il permet d'optimiser la gestion de l'énergie électrique à bord du véhicule et ce de manière prédictive. Il présente cependant l'inconvénient d'être basé sur un grand nombre de paramètres et, par voie de conséquence, d'avoir une gestion des deux moteurs, par leurs mises en marche et à l'arrêt, pouvant donner l'impression d'être non répétables dans des conditions similaires et, partant, d'être non maitrisées.

Le document de brevet publié US 2016/0200312 A1 divulgue, similairement au document précédent, un système de gestion d'énergie sur un véhicule hybride. Plus précisément, la gestion est telle que le moteur électrique sert au démarrage du véhicule jusqu'à une vitesse donnée et, une fois cette vitesse atteinte et dépassée, à démarrer le moteur thermique et gérer l'apport du moteur électrique de manière à permettre au véhicule, suite à un prochain arrêt, à redémarrer avec le moteur électrique uniquement. En fonction de certains paramètres liés au véhicule, c'est-à-dire notamment à l'état de charge de l'accumulateur d'énergie électrique, et d'autres liés au mode de conduite, comme notamment la demande d'accélération de la part du conducteur, le moteur thermique pourra être démarré avant d'atteindre cette vitesse donnée. Par conséquent, similairement au système de gestion du document précédent, ce système de gestion présente l'inconvénient de donner une impression de manque de répétabilité dans des conditions similaires et, partant, une gestion non maitrisée.

Le document de brevet publié US2016/304086 A1 divulgue également un système de contrôle d'un véhicule hybride, correspondant au préambule de la revendication 1.

L'invention a pour objectif de pallier au moins un des inconvénients de l'état de la technique susmentionné. Plus particulièrement, l'invention a pour objectif de proposer une gestion des moteurs thermique et électrique d'un véhicule hybride qui présente une certaine constance et répétabilité dans des conditions d'utilisation récurrentes et similaires.

L'invention a pour objet un procédé de contrôle de la chaîne de traction d'un véhicule hybride, comprenant un moteur thermique et une machine électrique, ledit procédé comprenant l'action suivante : émission d'une demande de démarrage du moteur thermique en fonction de plusieurs paramètres ; remarquable en ce que l'action d'émission de demande de démarrage du moteur thermique est bloquée à compter de la mise en marche du véhicule, ledit blocage étant levé dès que, à compter de ladite mise en marche, l'une des conditions d'un couple de conditions prédéterminées est satisfaite, ces conditions étant une distance parcourue du véhicule et une vitesse du véhicule atteinte.

La machine électrique peut comprendre un ou plusieurs moteurs électriques. Elle peut par ailleurs être une machine apte à produire une puissance mécanique à partir d'une source d'énergie autre qu'un combustible fossile, comme notamment une source d'énergie inertielle ou à air comprimé.

Le véhicule est avantageusement un véhicule hybride du type « plug-in », c'est-à-dire avec un accumulateur d'énergie électrique apte à être rechargé par une source d'énergie extérieure au véhicule, comme le réseau domestique de distribution électrique, avantageusement lorsque le véhicule est à l'arrêt.

Selon un mode avantageux de l'invention, le parcours de la distance D ou l'atteinte de la vitesse V par le véhicule, à compter de la mise en marche du véhicule, provoque le démarrage du moteur thermique.

Selon un mode avantageux de l'invention, la distance D et/ou la vitesse V dépendent de plusieurs paramètres comprenant le niveau de charge d'un accumulateur d'énergie électrique alimentant la machine électrique.

Selon un mode avantageux de l'invention, les paramètres dont dépend la distance D et/ou la vitesse V comprennent, en outre, le mode de conduite sélectionné par le conducteur parmi plusieurs modes.

Selon un mode avantageux de l'invention, les modes de conduite comprennent un mode de conduite privilégiant la machine électrique, la sélection dudit mode inhibant le démarrage du moteur thermique provoqué par le parcours de la distance D ou l'atteinte de la vitesse V par le véhicule, à compter de la mise en marche du véhicule.

Selon un mode avantageux de l'invention, la distance D dépend du niveau de charge d'un accumulateur d'énergie électrique alimentant la machine électrique, ladite distance D étant d'autant plus faible que le niveau de charge est faible.

Selon un mode avantageux de l'invention, la distance D ne peut augmenter lorsque ledit niveau de charge augmente lorsque le véhicule est en marche.

Selon un mode avantageux de l'invention, la mise en marche du véhicule correspond à une mise en marche de la chaîne de traction du véhicule.

L'invention a également pour objet un véhicule automobile hybride comprenant : un moteur thermique ; une machine électrique ; un accumulateur d'énergie électrique apte à alimenter la machine électrique ; une unité de contrôle du moteur thermique et de la machine électrique ; remarquable en ce que l'unité de contrôle est configurée pour exécuter le procédé selon l'invention.

Les mesures de l'invention sont intéressantes en ce qu'elles permettent par des moyens simples, consistant essentiellement en de la programmation de l'unité de contrôle de la chaîne de traction, d'assurer une prestation électrique, depuis la mise en marche du véhicule, qui est robuste et confère au fonctionnement du véhicule une perception par le conducteur d'une maitrise de la prestation en question. En effet, un conducteur parcourant régulièrement un même trajet percevra une constance et une répétabilité de la prestation électrique alors même que cette dernière reste sous le contrôle de nombreux paramètres autres que la vitesse du véhicule et la distance parcourue.

D'autres caractéristiques et avantages de la présente invention seront mieux compris à l'aide de la description et des dessins parmi lesquels :
- La figure 1 illustre de manière schématique la chaîne de traction d'un véhicule hybride et son unité de contrôle, conforme à l'invention ;
- La figure 2 est un logigramme représentatif du procédé de contrôle de la chaîne de traction du véhicule de la figure 1, conformément à l'invention ;
- La figure 3 représente de manière graphique l'évolution de l'état de démarrage du moteur thermique en fonction de la distance parcourue et de la vitesse atteinte ;
- La figure 4 est un graphique illustrant la dépendance de la distance à parcourir D par rapport au niveau de charge de l'accumulateur d'énergie électrique du véhicule ;
- La figure 5 illustre graphiquement l'évolution dans le temps du niveau de charge de l'accumulateur d'énergie électrique du véhicule et de la distance D.

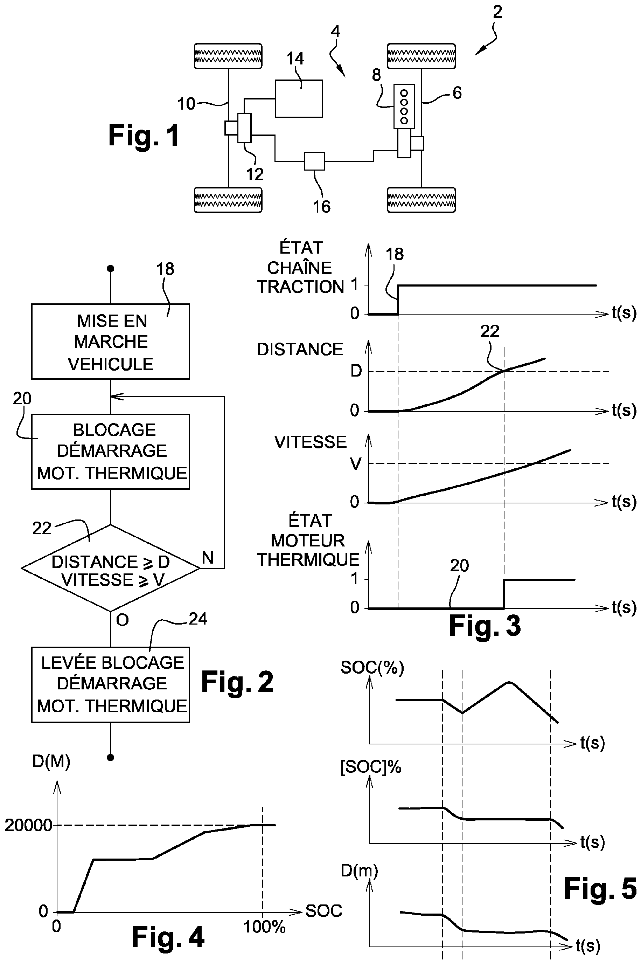

La figure 1 illustre de manière schématique un véhicule 2, plus particulièrement sa chaîne de traction 4 pourvue d'un contrôle conforme à l'invention.

Plus particulièrement, l'essieu avant 6 est entrainé par un moteur à combustion 8 alors que l'essieu arrière 10 est entrainé par un moteur électrique 12. Ce dernier est alimenté en énergie électrique par l'accumulateur d'énergie électrique 14. Une unité de contrôle 16, représentée de manière schématique, commande le fonctionnement des deux moteurs 8 et 12 de la chaîne de traction 4.

Il à noter que l'architecture qui vient d'être décrite et représentée à la figure 1 est exemplative, étant entendu que d'autres architectures sont possibles, comment nomment une architecture où les essieux sont inversés ou encore où le moteur électrique et le moteur à combustion forment une même unité entrainant le même essieu ou encore les deux essieux dans le cas d'un véhicule à quatre roues motrices.

La figure 2 illustre au moyen d'un logigramme la logique de fonctionnement de l'unité de contrôle 16 de la chaîne de traction 4 du véhicule 2 de la figure 1.

Dès la mise en marche du véhicule 18, le démarrage du moteur thermique est bloqué 20, et ce jusqu'à ce que le véhicule parcoure, depuis la mise en marche 18, la distance D ou que le véhicule atteigne, depuis la mise en marche 18, la vitesse V. De manière générale, l'émission d'une demande de démarrage du moteur thermique peut être fonction de nombreux paramètres, comme notamment la demande de puissance par le conducteur (degré et/ou vitesse d'enfoncement de la pédale d'accélération), le niveau de charge de l'accumulateur d'énergie électrique ou encore un besoin de chauffage dans le véhicule. Cela signifie que le moteur thermique est en principe susceptible d'être démarré à divers moments et dans diverses circonstances. Le blocage 20 de l'action d'émission de demande de démarrage du moteur thermique, à compter de la mise en marche du véhicule, a lieu aussi longtemps qu'aucun des deux critères susmentionnés de vitesse et de distance parcourue 22 n'est atteint. Dès qu'un de ces deux critères est atteint, à savoir que le véhicule a parcouru une distance D ou que le véhicule a atteint une vitesse V, le blocage est levé 24. Cela signifie que les différents paramètres évoqués ci-avant dont dépend l'action d'émission de demande de démarrage du moteur thermique sont pris en compte, permettant un démarrage du moteur. Une telle approche procure au conducteur une perception naturelle des critères de démarrage du moteur à combustion. Elle procure ainsi une perception de maîtrise de la gestion de la chaîne de traction.

Avantageusement, dès qu'un des deux critères de distance et de vitesse 22 est atteint, le moteur à combustion est démarré, ce qui renforce la perception de répétabilité du contrôle de la chaîne de traction, en particulier sur des trajets récurrents.

La figure 3 illustre le principe de contrôle de la chaîne de traction qui vient d'être décrit, et ce au moyen de graphes.

Le première graphe, ou graphe supérieur, illustre l'état de la chaîne de traction où un état 0 correspond à une chaîne de traction non opérationnelle et un état 1 correspond à un état opérationnel, c'est-à-dire un état où la chaîne de traction est prête à propulser le véhicule dès lors que la pédale d'accélération est sollicitée (pour autant bien sûr que d'autres conditions sécuritaires soient remplies, comme notamment l'activation de la position D (« Drive » ou marche avant) ou R (« Reverse » ou marche arrière) de la transmission et le bouclage de la ceinture de sécurité).

Le deuxième graphe illustre la distance parcourue par le véhicule.

Le troisième graphe illustre la vitesse du véhicule.

Le quatrième graphe, ou graphe inférieur, illustre l'état de démarrage du moteur thermique, où l'état 0 correspond au moteur thermique arrêté et l'état 1 correspond au moteur thermique démarré.

On peut observer que l'état du moteur thermique reste à 0, c'est-à-dire est éteint, depuis la mise en marche du véhicule 18, correspondant à l'état 1 de la chaîne de traction, et ce jusqu'à ce que le véhicule parcoure la distance D, à compter de la mise en marche du véhicule. Cet état éteint du moteur thermique correspond au blocage 20. Ce blocage est levé en l'occurrence lorsque le critère de distance D est rempli 22. On peut observer que le critère de vitesse V du véhicule n'est rempli qu'après le critère de distance D, le premier des deux critères, en l'occurrence celui de la distance D, provoquant la levée du blocage et plus particulièrement encore le premier démarrage du moteur thermique depuis la mise en marche du véhicule 18.

Les valeurs de distance D et de vitesse V des critères 22 dépendent avantageusement de plusieurs paramètres, comme notamment le niveau de charge de l'accumulateur d'énergie électrique et le mode de conduite du véhicule, à savoir hybride, zéro émission, puissance, etc. Le mode hybride est un mode de gestion des moteurs électrique et thermique intermédiaire, ou de compromis, entre les modes zéro émission et le mode puissance. Le mode zéro émission ou électrique favorise le fonctionnement électrique pur alors que le mode puissance favorise la puissance totale transmise aux roues, indépendamment des émissions de polluant et de la consommation d'énergie.

Les figures 4 et 5 illustrent la dépendance de la distance D de l'état de charge de l'accumulateur d'énergie électrique.

Plus précisément, la figure 4 est un graphe montrant l'évolution de la distance D du critère de distance parcourue, en fonction de l'état de charge de l'accumulateur d'énergie électrique, de 0% à 100%. Le taux de charge est noté SoC, acronyme de l'expression anglo-saxonne « State of Charge ». On peut observer que la distance D peut, à titre d'exemple, prendre une valeur de 20 000 mètres, c'est-à-dire 20 km, lorsque le taux de charge de l'accumulateur est de 100%. Il est entendu que cette distance D dépend en première ligne de la capacité de l'accumulateur, à savoir qu'un accumulateur de plus grande capacité permet de parcourir une plus grande distance en mode électrique pur, et inversement.

La figure 5 illustre l'évolution de la distance D en fonction de l'évolution dans le temps du niveau de charge de l'accumulateur alors que le véhicule est en état de marche. L'accumulateur peut en effet être rechargé alors que le véhicule est en état de marche, notamment par le moteur thermique et/ou par une action de freinage où le moteur électrique fonctionne en génératrice d'énergie électrique. Le graphe supérieur illustre l'évolution du taux de charge, noté SoC, dans le temps. Le graphe intermédiaire illustre une valeur filtrée du taux de charge, notée [SoC], où les augmentations sont filtrées. On peut en effet observer au graphe supérieur que le taux de charge reste initialement constant, subit une brève baisse, suivi d'une augmentation importante et d'une diminution. Le taux de charge filtré correspond au taux de charge non filtré à cette différence près que l'augmentation est coupée. Le taux de charge filtré reste constant malgré l'augmentation du taux de charge réel et reprend le profil du taux de charge réel lorsque ce dernier devient inférieur au niveau constant susmentionné. Le graphe inférieur illustre la distance D. On peut observer que le profil de la distance D suit le profil du taux de charge filtré [SoC].

## Revendications

1. Procédé de contrôle de la chaîne de traction (4) d'un véhicule hybride (2), comprenant un moteur thermique (8) et d'une machine électrique (12), ledit procédé comprenant l'action suivante :
- émission d'une demande de démarrage du moteur thermique (8) en fonction de plusieurs paramètres ;
dans lequel l'action d'émission de demande de démarrage du moteur thermique (8) est bloquée (20) à compter de la mise en marche (18) du véhicule (2),
**caractérisé en ce que**
ledit blocage (20) est levé (24) dés que, à compter de ladite mise en marche (18), l'une des conditions d'un couple de conditions prédéterminées est satisfaite, ces conditions étant une distance D parcourue du véhicule et une vitesse V du véhicule atteinte (22).

2. Procédé selon la revendication 1, dans lequel le parcours de la distance D ou l'atteinte de la vitesse V (22) par le véhicule (2), à compter de la mise en marche (18) du véhicule (2), provoque le démarrage du moteur thermique (8).

3. Procédé selon l'une des revendications 1 à 2, dans lequel la distance D et/ou la vitesse V dépendent de plusieurs paramètres comprenant le niveau de charge (SoC) d'un accumulateur d'énergie électrique (14) alimentant la machine électrique (12).

4. Procédé selon la revendication 3, dans lequel les paramètres dont dépendent la distance D et/ou la vitesse V comprennent, en outre, le mode de conduite sélectionné par le conducteur parmi plusieurs modes.

5. Procédé selon les revendications 2 et 4, dans lequel les modes de conduite comprennent un mode de conduite privilégiant la machine électrique, la sélection dudit mode inhibant le démarrage du moteur thermique (8) provoqué par le parcours de la distance D ou l'atteinte de la vitesse V (22) par le véhicule (2), à compter de la mise en marche (18) du véhicule (2).

6. Procédé selon l'une des revendications 1 à 5, dans lequel la distance D dépend du niveau de charge (SoC) d'un accumulateur d'énergie électrique (14) alimentant la machine électrique (12), ladite distance D étant d'autant plus faible que le niveau de charge (SoC) est faible.

7. Procédé selon la revendication 6, dans lequel la distance D ne peut augmenter lorsque ledit niveau de charge (SoC) augmente lorsque le véhicule est en marche.

8. Procédé selon l'une des revendications 1 à 7, dans lequel la mise en marche (18) du véhicule (2) correspond à une mise en marche de la chaîne de traction (4) du véhicule (2).

9. Véhicule automobile hybride (2) comprenant :
- un moteur thermique (8) ;
- une machine électrique (12) ;
- un accumulateur d'énergie électrique (14) apte à alimenter la machine électrique (12) ;
- une unité de contrôle (16) du moteur thermique (8) et de la machine électrique (12) ;
dans lequel l'unité de contrôle (16) est configurée pour exécuter le procédé selon l'une des revendications 1 à 8.

## Patentansprüche

1. Verfahren zur Steuerung der Traktionskette (4) eines Hybridfahrzeugs (2), umfassend einen Wärmemotor (8) und eine elektrische Maschine (12), wobei das Verfahren die folgenden Maßnahmen umfasst:
- Aussenden einer Aufforderung zum Starten des Wärmemotors (8).
Funktion mehrerer Parameter; bei dem die Ausgabe einer Startanforderung für die Wärmekraftmaschine (8) ab dem Start (18) des Fahrzeugs (2) blockiert (20) wird, **dadurch gekennzeichnet, dass** die Blockierung (20) aufgehoben (24) wird, sobald , ab dem Start (18) eine der Bedingungen eines Paars vorbestimmter Bedingungen erfüllt ist, wobei diese Bedingungen eine vom Fahrzeug zurückgelegte Strecke D und eine erreichte Geschwindigkeit V des Fahrzeugs sind (22).

2. Verfahren nach Anspruch 1, bei dem der Weg des Die Entfernung D bzw. das Erreichen der Geschwindigkeit V (22) durch das Fahrzeug (2) ab dem Start (18) des Fahrzeugs (2) bewirkt den Start der Wärmekraftmaschine (8).

3. Verfahren nach einem der Ansprüche 1 bis 2, bei dem die Abstand D und/oder Geschwindigkeit V hängen von mehreren Parametern ab, einschließlich des Ladezustands (SoC) eines elektrischen Energiespeichers (14), der die elektrische Maschine (12) versorgt.

4. Verfahren nach Anspruch 3, bei dem die Parameter davon Abhängig von der Entfernung D und/oder der Geschwindigkeit V wird auch der vom Fahrer aus mehreren Modi ausgewählte Fahrmodus berücksichtigt.

5. Verfahren nach den Ansprüchen 2 und 4, bei dem die Modi von Das Fahren umfasst einen Fahrmodus, der die elektrische Maschine begünstigt, wobei die Auswahl dieses Modus das Starten des Wärmemotors (8) verhindert, das durch das Zurücklegen der Strecke D oder das Erreichen der Geschwindigkeit V (22) durch das Fahrzeug (2) verursacht wird, vom Start (18) des Fahrzeugs (2) aus.

6. Verfahren nach einem der Ansprüche 1 bis 5, bei dem der Abstand D vom Ladezustand (SoC) eines die elektrische Maschine (12) versorgenden elektrischen Energiespeichers (14) abhängt, wobei dieser Abstand D um ein Vielfaches geringer ist als der Ladezustand Die Ladung (SoC) ist niedrig.

7. Verfahren nach Anspruch 6, bei dem der Abstand D nicht möglich ist erhöhen, wenn der Ladezustand (SoC) bei laufendem Fahrzeug steigt.

8. Verfahren nach einem der Ansprüche 1 bis 7, bei dem das Einschalten (18) des Fahrzeugs (2) dem Einschalten der Antriebskette (4) des Fahrzeugs (2) entspricht.

9. Hybridkraftfahrzeug (2), umfassend:
- eine Wärmekraftmaschine (8);
- eine elektrische Maschine (12);
- einen elektrischen Energiespeicher (14), der die Maschine mit Strom versorgen kann elektrisch (12);
- eine Steuereinheit (16) der Wärmekraftmaschine (8) und der Maschine elektrisch (12);
bei dem die Steuereinheit (16) zur Ausführung des Verfahrens nach einem der Ansprüche 1 bis 8 ausgebildet ist.

## Claims

1. Method for controlling the traction chain (4) of a hybrid vehicle (2), comprising a thermal engine (8) and an electric machine (12), said method comprising the following action:
- emission of a request to start the thermal engine (8) in
function of several parameters; in which the action of issuing a start request for the thermal engine (8) is blocked (20) from the start (18) of the vehicle (2), **characterized in that** said blocking (20) is lifted (24) as soon as, from said start-up (18), one of the conditions of a pair of predetermined conditions is satisfied, these conditions being a distance D traveled by the vehicle and a speed V of the vehicle reached (22 ).

2. A method according to claim 1, wherein the path of the distance D or the achievement of speed V (22) by the vehicle (2), from the start (18) of the vehicle (2), causes the starting of the thermal engine (8).

3. Method according to one of Claims 1 to 2, in which the distance D and/or the speed V depend on several parameters including the level of charge (SoC) of an electrical energy accumulator (14) supplying the electrical machine (12).

4. Method according to claim 3, in which the parameters whose depending on the distance D and/or the speed V also include the driving mode selected by the driver from several modes.

5. Method according to claims 2 and 4, wherein the modes of driving include a driving mode favoring the electric machine, the selection of said mode inhibiting the starting of the thermal engine (8) caused by the travel of the distance D or the reaching of the speed V (22) by the vehicle (2), from the start (18) of the vehicle (2).

6. Method according to one of claims 1 to 5, in which the distance D depends on the charge level (SoC) of an electrical energy accumulator (14) supplying the electric machine (12), said distance D being as much lower than the level of charge (SoC) is low.

7. Method according to claim 6, in which the distance D cannot increase when said charge level (SoC) increases when the vehicle is running.

8. Method according to one of Claims 1 to 7, in which switching on (18) of the vehicle (2) corresponds to switching on of the traction chain (4) of the vehicle (2).

9. Hybrid motor vehicle (2) comprising:
- a heat engine (8);
- an electric machine (12);
- an electrical energy accumulator (14) capable of supplying the machine electric (12);
- a control unit (16) of the heat engine (8) and the machine electric (12);
in which the control unit (16) is configured to execute the method according to one of claims 1 to 8.
